# EUROPÄISCHE PATENTSCHRIFT

(11) **EP 0 577 860 B1**
(45) Veröffentlichungstag und Bekanntmachung des Hinweises auf die Patenterteilung: **07.02.1996**
(21) Anmeldenummer: 92111326.2
(22) Anmeldetag: 03.07.1992
(51) Int. Cl.: H04B 3/54, H04B 1/66

(54) **Datenübertragung über elektrische Verteilnetze unter Benutzung des Direktsequenzspreizspektrumverfahrens**
Data transmission by means of electrical distribution lines using direct sequence spread spectrum
Transmission de données sur un réseau de distribution électrique à spectre étalé au moyen d'une séquence directe

(43) Veröffentlichungstag der Anmeldung: 12.01.1994
(73) Patentinhaber: ABB PATENT GmbH, D-68309 Mannheim (DE)
(72) Erfinder: Rosch, Rainer, Dr., W-5880 Lüdenscheid (DE); Lehmann, Klaus, Prof. Dr., W-8552 Höchstadt (DE); Pecher, Alfred, W-8721 Stadtlauringen (DE); Seufert, Horst, W-8735 Eltingshausen (DE)
(74) Vertreter: Rupprecht, Klaus, Dipl.-Ing.

(56) Entgegenhaltungen:
- US-A- 4 512 024
- PATENT ABSTRACTS OF JAPAN vol. 8, no. 281 (E-286)(1718) 21. Dezember 1984
- TRANSACTIONS OF THE INSTITUTE OF ELECTRONICS AND COMMUNICATION ENGINEERS OF JAPAN, SECTION E Bd. E74, Nr. 5, Mai 1991, TOKYO JP Seiten 1108 - 1113 KAJIWARA
- ET AL 'Direct-Sequence Spread-Spectrum Demodulator Using Block Signal Processing'

## Beschreibung

Die Erfindung bezieht sich auf ein Verfahren zur Übertragung von digitalen Daten über elektrische Verteilnetze.

Das Verfahren ist nicht auf bestimmte Anwendungen oder auf bestimmte Spannungsebenen elektrischer Verteilnetze beschränkt, es ist jedoch insbesondere geeignet zur digitalen Datenübertragung über elektrische Installationsnetze.

Die Datenübertragung über das Elektro-Installationsnetz hat den Vorteil, daß an allen wesentlichen Punkten eines Gebäudes Zugang zum Netz besteht und somit keine zusätzlichen Leitungen verlegt werden müssen. Übertragungsprobleme entstehen jedoch dadurch, daß das Installationsnetz nicht zum Zweck der Datenübertragung, sondern zur Energieübertragung konzipiert wurde. Die große Zahl und die Vielfalt der am Installationsnetz angeschlossenen elektrischen Verbraucher bewirken, daß sowohl die Signaldämpfung als auch die Störleistungsdichte des Installationsnetzes zeitvariante und frequenzselektive Größen sind, wobei die Frequenzselektivität ihrerseits zeitvariant ist. Insbesondere Elektrogeräte mit netzparallelen Kondensatoren dämpfen das Sendesignal erheblich und vermindern dadurch die Reichweite. Hinzu kommen Vorschriften, die bei der Bildung von Übertragungssignalen zu beachten sind.

Beispielsweise gelten zur Zeit für die Nachrichtenübertragung über das Installationsnetz eines Gebäudes Vorschriften der Deutschen Bundespost in Form der FTZ-Richtlinie 17 R 2040 (April 1978), die die Sendeleistung auf maximal 5 mW begrenzen, bezogen auf eine Netznachbildung von 50 Ohm. Der zugelassene Frequenzbereich reicht von 30 bis 146 kHz.

Am Markt sind seit Jahren Systeme mit schmalbandiger Datenübertragung etabliert. Ein solches System ist in der Druckschrift BJE 1008/3.92/0502 der Firma Busch-Jaeger Elektro GmbH, Lüdenscheid beschrieben. Die Druckschrift bezieht sich auf einen Netzbus X-10, der geeignet ist zur Übertragung von Steuersignalen über das Installationsnetz. Der Netzbus X-10 arbeitet mit einer 120 kHz-Trägerfrequenz. Impulstelegramme mit dieser Trägerfrequenz werden jeweils unmittelbar nach einem Nulldurchgang der Netzspannung gesendet. In den damit festgelegten Sendezeitbereichen wird ein günstiges Verhältnis von Nutzsignal zu Störsignal erzielt. Das System arbeitet im vorgesehenen Anwendungsbereich zufriedenstellend, ist aber auf Übertragungsraten unter 50 Bit pro Sekunde begrenzt.

Um die Grenzen der Schmalbandübertragung überwinden zu können, wird seit mehreren Jahren die Anwendbarkeit der Bandspreiztechnik zur digitalen Datenübertragung über Stromversorgungsnetze untersucht. Unter den Sammelbegriff "Bandspreiztechnik" fallen unterschiedliche Verfahren zur Bildung eines Sendesignals bzw. zur empfangsseitigen Detektion eines solchen Signals. Zur Anwendung für die Datenübertragung über Stromversorgungsnetze ist unter anderem das Frequenzsprungverfahren vorgeschlagen worden. Ein solches Verfahren ist beispielsweise in der EP-A2-01 99 148 beschrieben. Es wird dort mit einem Sendesignal gearbeitet, das sich aus mehreren Frequenzen zusammensetzt, die aus einem Vorrat an diskreten Frequenzen ausgewählt sind. Die Frequenzen werden nach einem Variationsmuster (Code) innerhalb eines Zeitrasters in wechselnder Zusammensetzung benutzt. Durch Wahl der Frequenzen zur Bildung des Zeitrasters und der Frequenzen des Frequenzvorrats wird ein System orthogonaler Signalformen geschaffen.

Dadurch wird ein Vielfachzugriff auf einen Kanal, also ein gleichzeitiger Sendebetrieb mit mehreren Sendern möglich. Eine Unterscheidbarkeit der beiden Binärsymbole, z.B. 0 und 1 wird dadurch erzielt, daß die für das Sendesignal benutzten Frequenzsätze unterschiedlich sind.

Das Zeitraster für das Frequenzsprungverfahren wird aus der Netzfrequenz gewonnen, die auch empfangsseitig zur Synchronisation benutzt wird. Dieses Vorgehen wirkt sich zwar günstig auf den Realisierungsaufwand aus, schränkt aber die erzielbare Datenrate erheblich ein. Aufgrund des Jitters der Netzwechselspannungs-Nulldurchgänge und des dadurch entstehenden Synchronisationsfehlers kann nämlich die Dauer der einzelnen Zeitabschnitte nicht beliebig klein gewählt werden.

Der Erfindung liegt daher die Aufgabe zugrunde, ein alternatives Verfahren zur Datenübertragung über elektrische Verteilnetze anzugeben, das neben einer hohen Störunempfindlichkeit auch eine hohe Datenrate zuläßt.

Diese Aufgabe wird gelöst durch ein Verfahren zur Übertragung von Daten, die als 0/1 oder (-1)/1-Bitstrom vorliegen, über elektrische Verteilnetze, das nachstehende Schritte aufweist,
a) zur Bildung eines Sendesignals:
a1) Bildung einer Folge von Sendesignal-Koeffizienten (p(k)) durch
   - Verwendung einer Autokorrelationsfunktion beliebiger Länge, wobei eine Autokorrelationsfunktion mit hohem Haupt- zu Nebenmaximumsverhältnis gewählt ist,
   - Entfaltung der Autokorrelationsfunktion zur Gewinnung der Sendesignal-Koeffizienten (p(k)), und
   - Polung der Sendesignal-Koeffizienten (p(k)) in Abhängigkeit von der Folge der zu übertragenden Datenbits (0/1; (-1)/1);
a2) Bildung eines an das Frequenzspektrum des Übertragungskanals angepaßten Zwischensignals (pᵢ(k)), das es ermöglicht mit maximaler Sendeenergie zu arbeiten, durch
   - Dehnung, wobei eine gedehnte Signalfolge (pₑ(k)) entsteht, und
   - Interpolation, wobei das Zwischensignal (pᵢk)) entsteht;
a3) Bildung einer Sendesignalfolge (pₘ(k)) durch spezielle ein- oder mehrkanalige Modulation des Zwischensignals (pᵢ(k)) und Umsetzung der Sendesignalfolge (pₘ(k)) in ein Sendesignal entsprechend dem zur Verfügung stehenden Frequenzband, z.B. durch Ansteuerung eines D/A-Wandlers mit Filter und Leistungstufe;
b) zur empfangsseitigen Rückgewinnung der übertragenden Datenbitfolge aus dem Empfangssignal:
b1) ein- oder mehrkanalige Demodulation des Empfangssignals;
b2) Filterung mit einem ein- oder mehrkanaligen Optimalfilter, das so bemessen ist, daß sich am Ausgang die sendeseitig entfaltete Autokorrelationsfunktion ergibt;
b3) Verwendung einer auf das Hauptmaximum des Empfänger-Ausgangssignals angepaßten Schwelle zur Detektion der Bitfolge des übertragenen Datenbitstromes.

Ausgestaltungen des Verfahrens sind in der nachstehenden Beschreibung erläutert und in den Patentansprüchen angegeben.

Vorteile des Verfahrens bestehen insbesondere darin, daß kein Synchronisationsbaustein erforderlich ist und daß eine hohe Datenübertragungsrate von einigen Kilobit pro Sekunde möglich ist, auch in stark gestörten Netzen. Das Verfahren läßt einen Vielfachzugriff auf einen Übertragungskanal zu, da Sendesignalkoeffizienten gewählt werden können, die orthogonal zueinander sind.

Eine ausführlichere Beschreibung des Verfahrens erfolgt nachstehend anhand der Figuren der Zeichnung.

Mit der Erfindung wird angestrebt, empfangsseitig ein Signal mit hohem Haupt- zu Nebenmaximumverhältnis zu gewinnen, das es ermöglicht, den Datenempfang auf eine Schwellwertentscheidung in Hauptmaximumsnähe zu reduzieren. Um dieses Ziel zu erreichen, wird ein Verfahren verwendet, das auf der spektralen Spreizungstechnik oder CDMA (Code Division Multiple Access) basiert und bei dem ein Korrelationsempfang einer vorgegebenen günstigen Autokorrelationsfunktion erfolgt.

Als Basis für die Bildung eines geeigneten Sendesignals dient eine segment- oder periodische Autokorrelationsfunktion, die durch Entfaltung, d.h. Faktorisierung, des die Autokorrelationsfunktion beschreibenden Polynoms eine entsprechende, meist mehrstufige Sendefolge ergibt. Geeignete Barker-ähnliche Autokorrelationsfunktionen und Methoden zum Auffinden von Korrelationscodes mit günstigen Autokorrelationseigenschaften sind in den Veröffentlichungen K. Lehmann, "Entwurf von Filterstrukturen zur Erzeugung mehrstufiger Codes mit Barker-Autokorrelations-Eigenschaften", AEÜ, Band 33, (1979), Seiten 190 bis 192 (L1), K. Lehmann, "Erzeugung mehrstufiger orthogonaler, periodischer Folgen", AEÜ, Band 34, (1980), Seiten 37 bis 40 (L2) und K. Lehmann, "Synthese mehrstufiger Folgen mit Pseudo-Noise-Autokorrelationsfunktion", ntz Archiv, Band 5, (1983), Seiten 233 bis 237 (L3) beschrieben, die insoweit Inhalt dieser Beschreibung sind. In der erstgenannten Literaturstelle L1 ist dargelegt, daß mit mehrstufigen Codes Autokorrelationsfunktionen mit beliebiger Länge erzielbar sind. Es sind vorgebbare Funktionen synthetisierbar. Die aus dieser Literaturstelle entnehmbare damalige Problematik der Nullstellensuche (Faktorisierung) hochgradiger Polynome liegt heute dank leistungsfähiger Hard- und Software nicht mehr vor.

Im Verfahrensschritt a1) geht man von einer solchen synthetisierten Autokorrelationsfunktion aus, die ein hohes Haupt- zu Nebenmaximumverhältnis aufweist. Durch Entfaltung werden Sendesignalkoeffizienten p(k) gewonnen. Diese Sendesignalkoeffizienten können in einer Sendeeinrichtung beispielsweise in einem EPROM gespeichert sein. Eine digitale Steuer- und Recheneinheit, z.B. ein Mikrocontroller verwendet diese gespeicherten Sendesignalkoeffizienten als Sendefolge mit positiven oder negativem Vorzeichen je nach dem zu übertragenden Datenbit 0 oder 1 bzw. -1 oder 1. Die Datenmodulation besteht also einfach in einem Vorzeichenwechsel der Sendefolge p(k).

Zur Anpassung des Spektrums der Sendesignalfolge p(k) an das zur Verfügung stehende Übertragungsband des Kanals (Stromversorgungsnetz) wird eine digitale spektrale Formung durchgeführt. Dazu erfolgt zunächst im Verfahrensschritt a2) eine Dehnung und Interpolation, wobei ein Zwischensignal pᵢ(k) entsteht. Im Verfahrensschritt a3) wird ausgehend von dem Zwischensignal eine spezielle digitale Modulation durchgeführt, und zwar vorzugsweise in Form von energieinvarianter Umtastung ganzzahliger Wertepakete innerhalb eines Sendesegments, wobei eine gewünschte Spektralverschiebung erreicht wird.

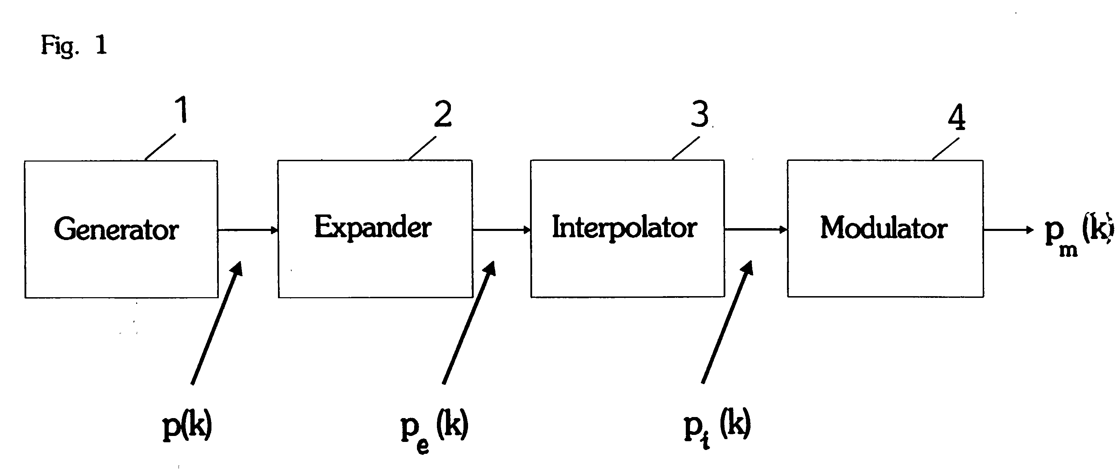

In Figur 1 sind die sendeseitigen Funktionen zur Bildung eines Sendesignals dargestellt. Mit Bezugszeichen 1 ist ein Generator bezeichnet, in dem die zur gewählten Autokorrelationsfunktion gehörenden Sendesignalkoeffizienten p(k) generiert oder über eine Schnittstelle zugeführte Koeffizienten-Folgen gespeichert sind. Im Generator 1 erfolgt auch die Datenmodulation, also die Polung der Sendesignal-koeffizienten p(k). In einem Expander 2 entstehen gedehnte Koeffizienten pₑ(k), im Interpolator 3 das Zwischensignal pᵢ(k). Im Modulator 4 werden schließlich die spektral geformten Sendesignalkoeffizienten pₘ(k) gebildet.

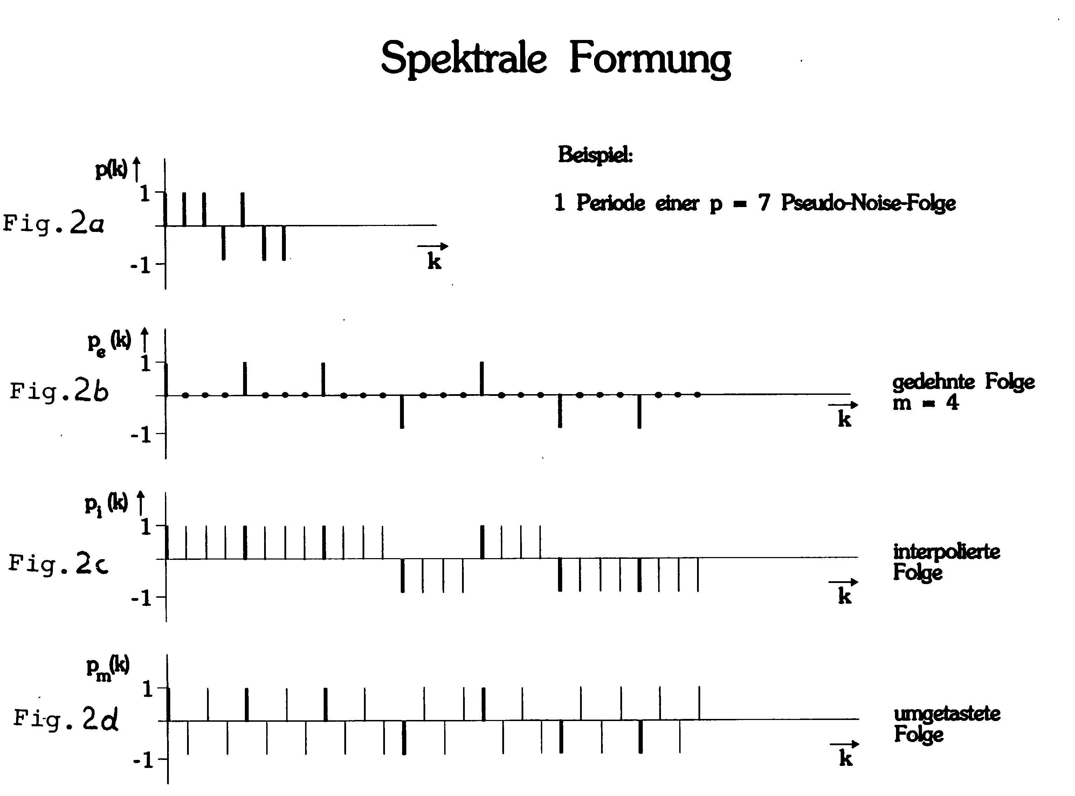

Figur 2a zeigt beispielhaft eine Periode einer Sendesignal-Koeffizientenfolge p(k) mit der Länge p = 7.

Figur 2b zeigt eine mit dem Dehnungsfaktor m = 4 gedehnte Folge pₑ(k).

Figur 2c zeigt die zugehörige interpolierte Folge des Zwischensignals pᵢ(k).

Figur 2d zeigt für den Fall einer einkanaligen, energieinvarianten Umtastung die sich ergebende Koeffizientenfolge Pₘ(k).

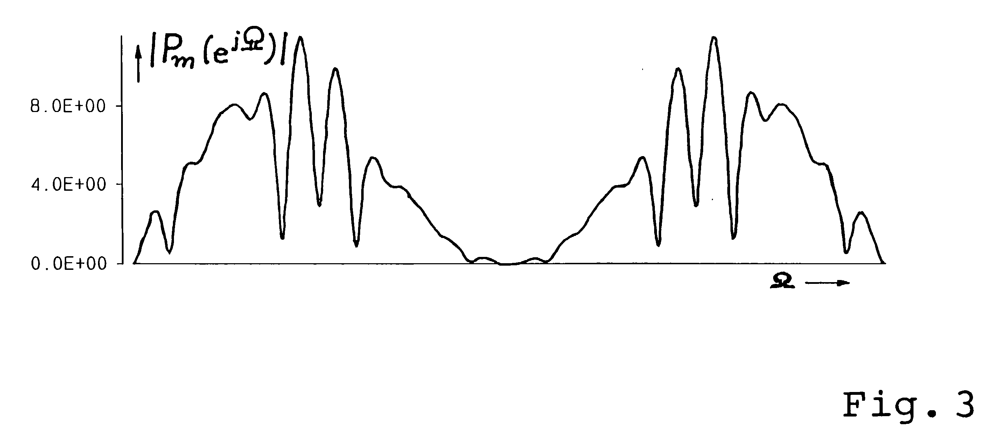

In Figur 3 ist der Verlauf des Betrags der Energiedichten Pₘ(e^{jΩ}) in Abhängigkeit der normierten Kreisfrequenz Ω aufgetragen, der durch die spezielle Modulation erreicht wird. Im Gegensatz zu einer normalen Modulation mit Abtastwerten einer Cosinus-Funktion wird eine Sendeenergie-Verteilung erreicht, die im Bereich 0 < Ω < π höhere Energieanteile besitzt und unsymmetrisch zum Pseudo-Modulationsträger ist.

Die auf die beschriebene Weise gebildete Sendesignalfolge pₘ(k) kann nach einer D/A-Wandlung in das elektrische Verteilnetz mit Hilfe eines Koppeltransformators eingekoppelt werden.

Während der Übertragung wird das Sendesignal durch die Einwirkung von Störsignalen und durch Laufzeiten verändert zu einem Empfangssignal.

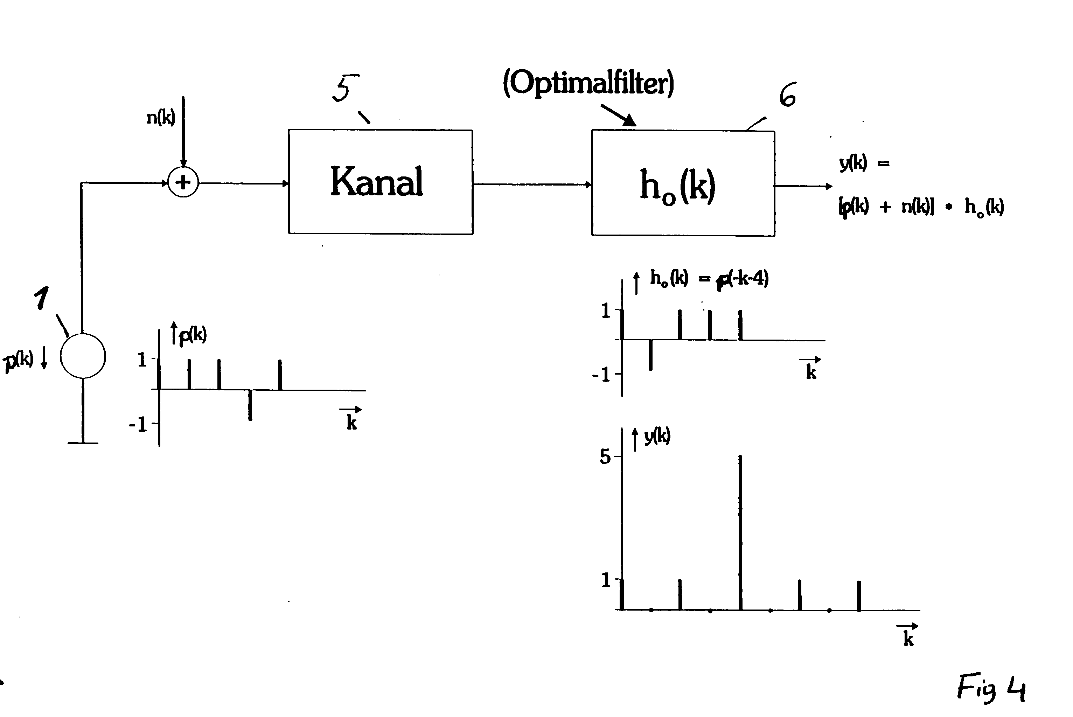

In Figur 4 ist das Prinzip des benutzten Korrelationsempfangs dargestellt, wobei die Einwirkung eines Störers n(k) im Kanal 5 auf das im Generator 1 erzeugte Sendesignal p(k) berücksichtigt ist. In dieser Prinzipdarstellung sind die Stufen zur Signalformung und Rückformung weggelassen. Deutlich gemacht werden soll mit Figur 4 lediglich, daß die Impulsantwort hₒ(k) des empfangsseitigen Optimalfilters 6 so bemessen wird, daß sich als Ausgangssignal y(k) die sendeseitig entfaltete Autokorrelationsfunktion ergibt.

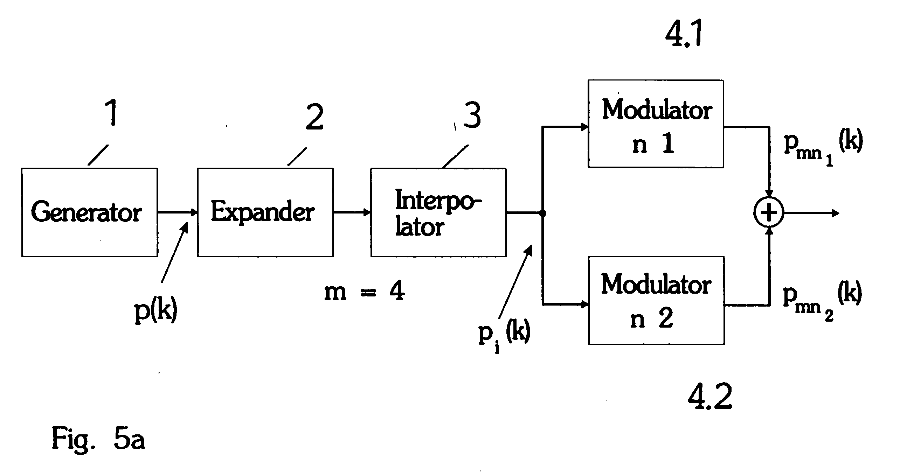

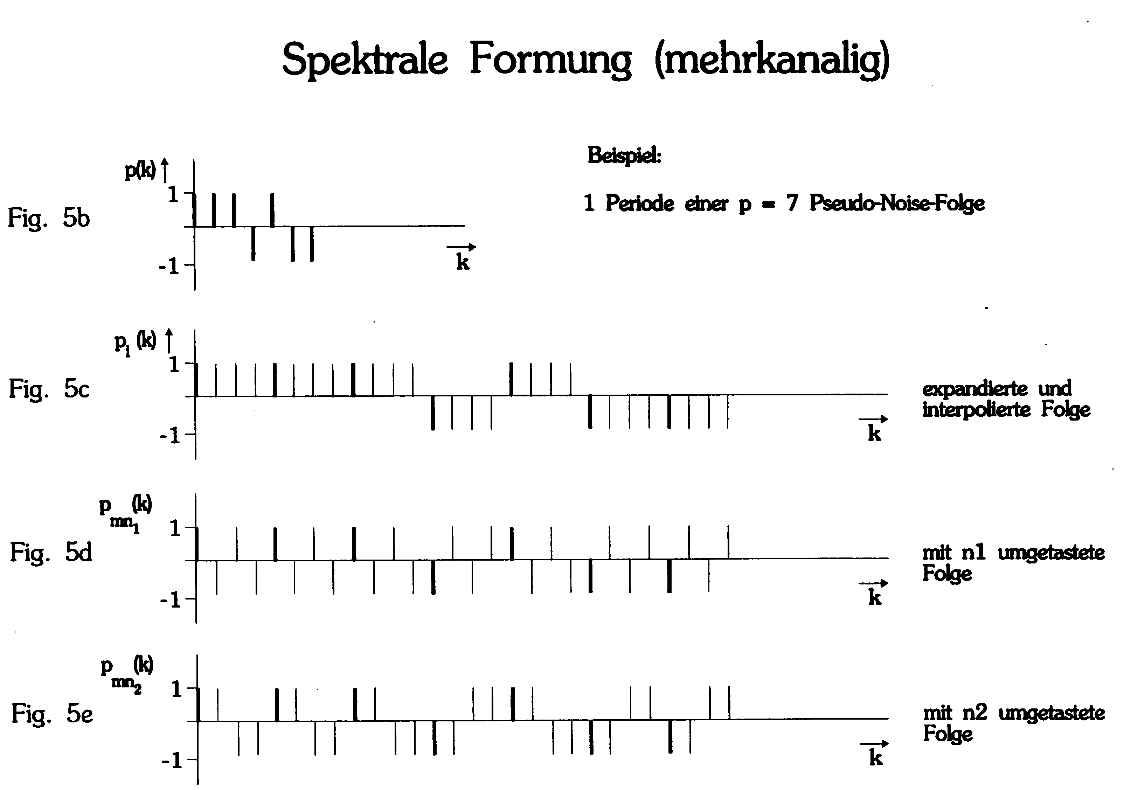

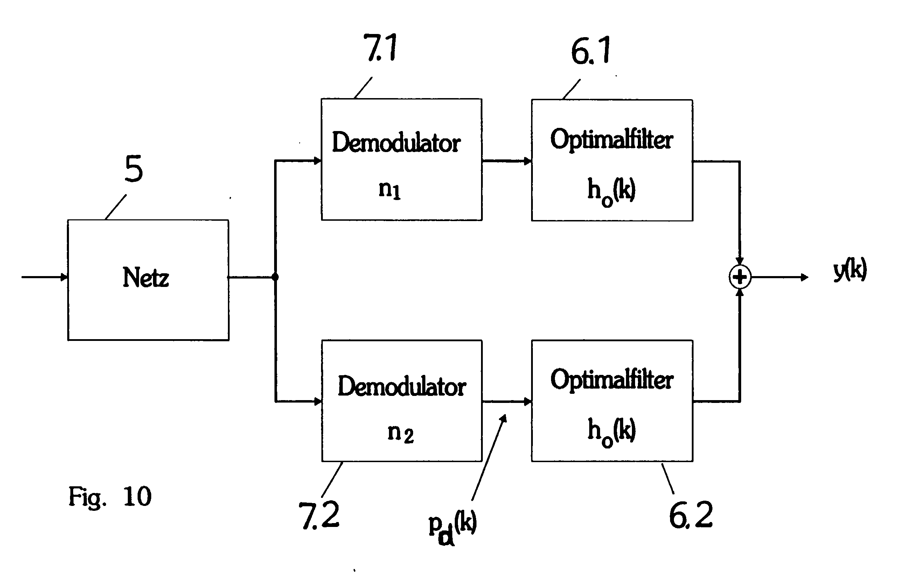

In den Figuren 5a und 10 ist ein Ausführungsbeispiel mit zweikanaliger Modulation dargestellt. Die Modulation kann auch mit noch mehr Kanälen vorgenommen werden.

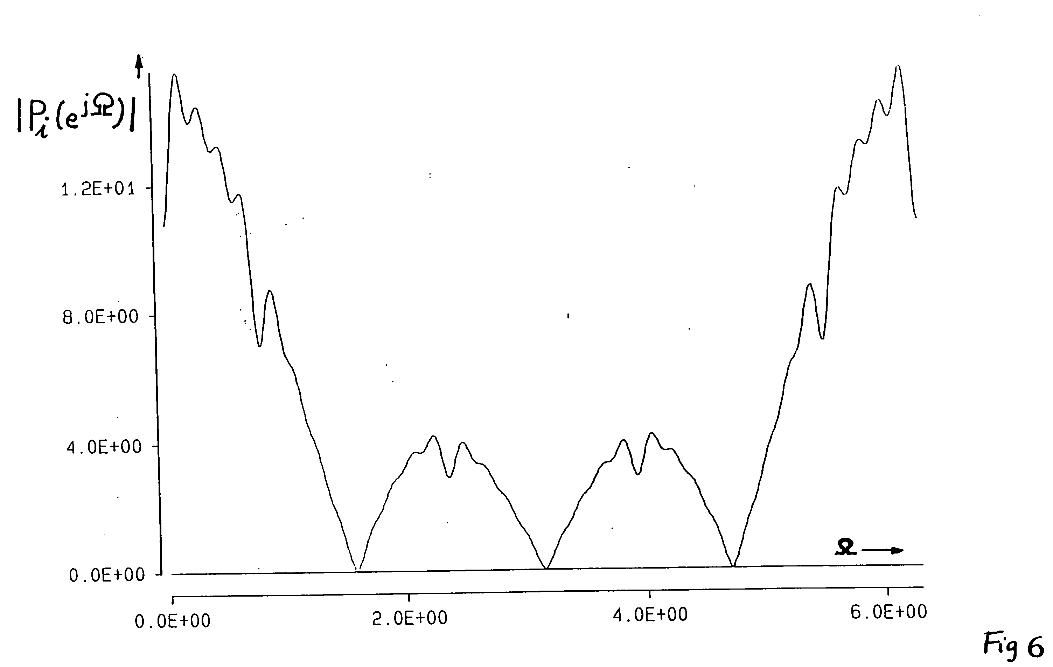

Figur 5a zeigt eine Sendesignalbildung unter Verwendung eines ersten Modulators 4.1 und eines zweiten Modulators 4.2 zur Durchführung einer Orthogonal-Modulation. Die Figuren 5b bis 5e zeigen die in Figur 5a benannten Folgen am Beispiel eines Segments einer p=7-Pseudo-Noise-Folge. Die Ausgangssignale dieser Modulatoren werden als Summenfolge für die Übertragung verwendet. Damit läßt sich ein besonders günstiges Sendesignal erzeugen, nämlich ein energiereiches Sendesignal, wie anhand der Figuren 6 bis 9 dargestellt wird.

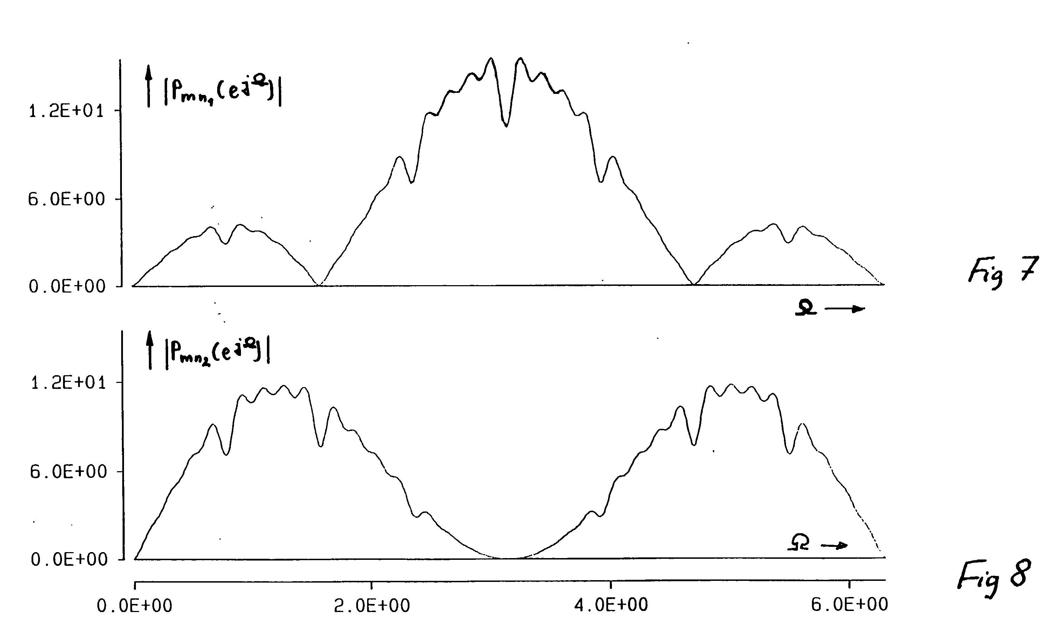

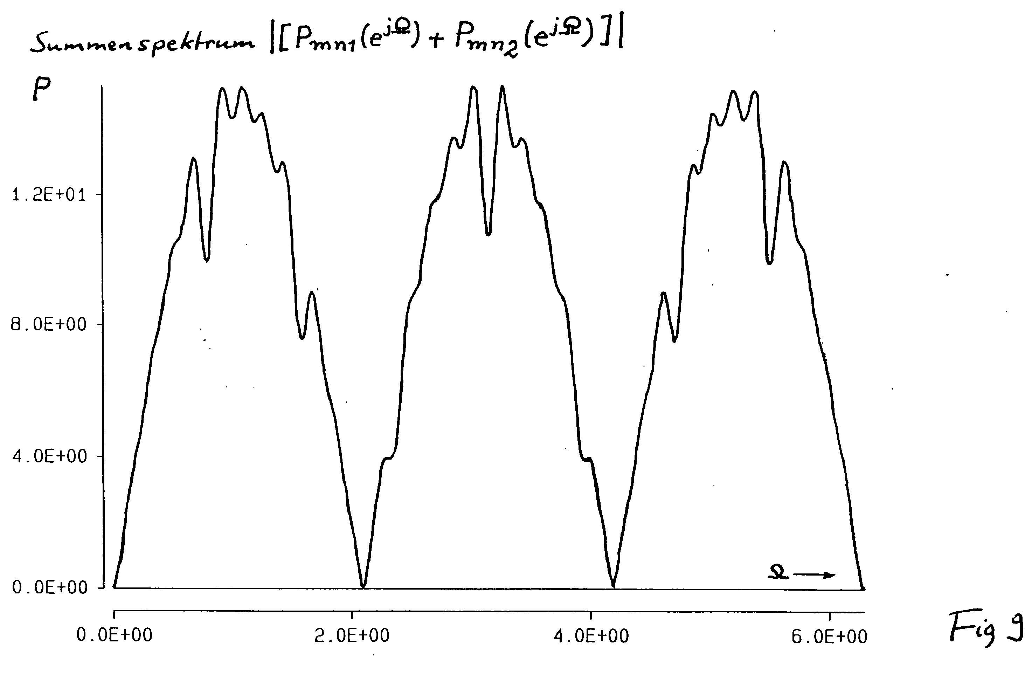

Figur 6 zeigt das expandierte und interpolierte Tiefpaß-Spektrum Pᵢ(e^{jΩ}), einer p=9-Folge, das durch die zweikanalige Modulation in die in den Figuren 7 und 8 gezeigten Spektralbereiche verschoben wird. Durch komplexe Addition entsteht ohne weitere Filterung das in Figur 9 gezeigte Summenspektrum mit Bandpaß-Charakteristik.

Figur 10 zeigt die zugehörige empfangsseitige zweikanalige Rückmodulation, mit Hilfe eines ersten Demodulators 7.1 und eines zweiten Demodulators 7.2. Es können zwei Optimalfilter 6.1, 6.2 oder ein einziges, im Multiplex-Betrieb genutztes Optimalfilter verwendet werden. Als Summensignal entsteht das Ausgangssignal y(k). Die vorgeschlagene Orthogonalmodulation hat den Vorteil, daß im Falle eines Ausfalls eines Modulationskanals oder einer modulierten Teilfolge, die Autokorrelationsfunktion in gleicher Form, wenn auch mit halbem Wert am Empfängerausgang zur Verfügung steht. Eine solche Störung kann detektiert werden und es kann die Auswerteschwelle entsprechend angepaßt werden.

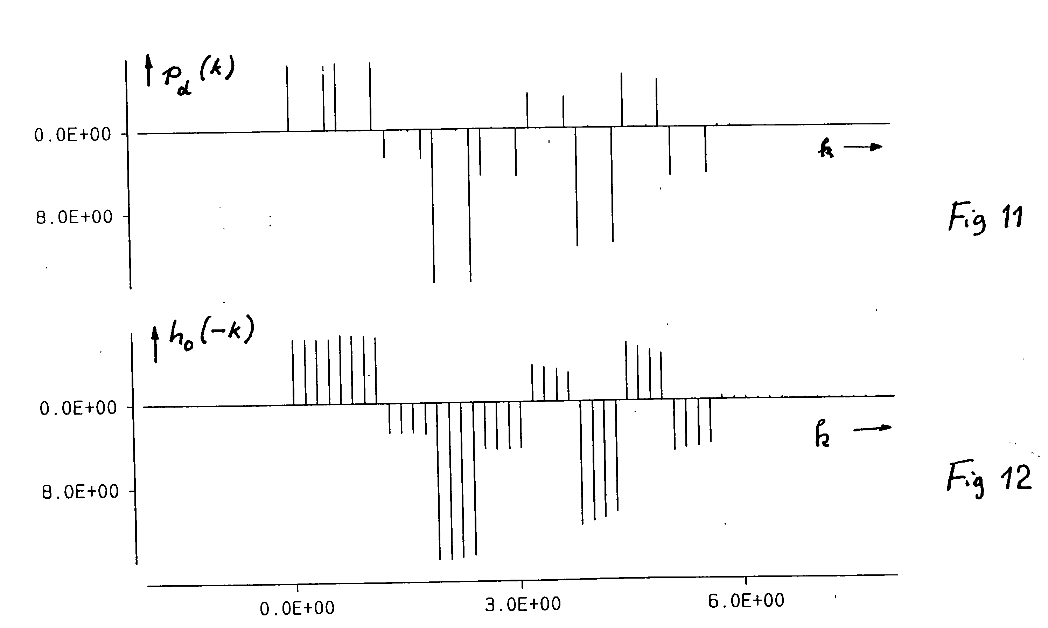

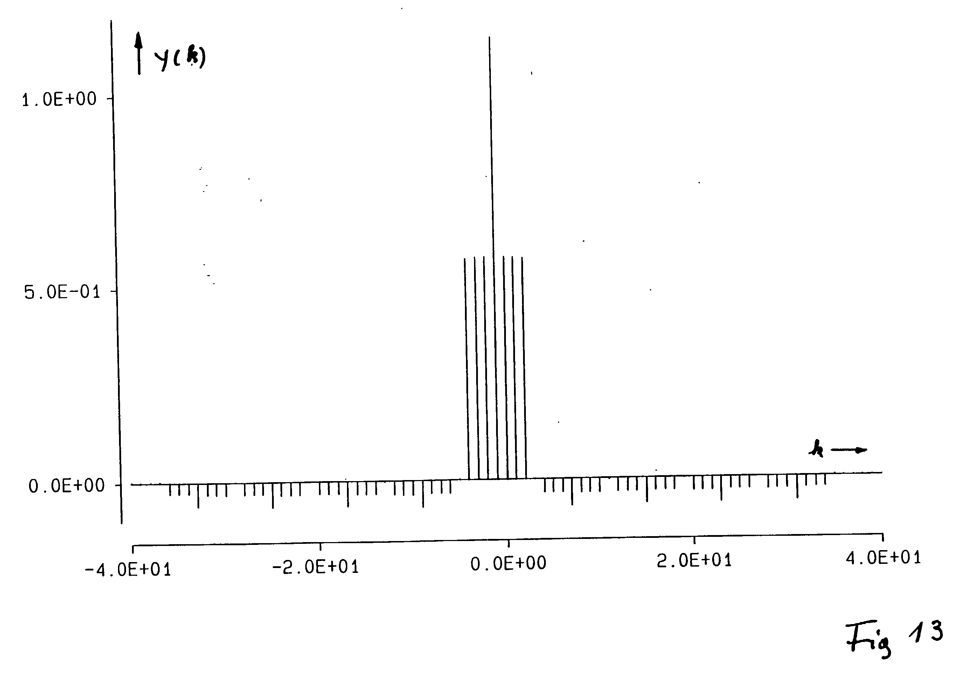

Die Figuren 11 bis 13 zeigen Beispiele für die empfangsseitigen Signale. Figur 11 zeigt das demodulierte Signal p_{d}(k). In Figur 12 ist die Impulsantwort des Optimalfilters dargestellt und in Figur 13 das Ausgangssignal y(k), das zugleich die verwendete und verschobene Autokorrelationsfunktion darstellt.

Die verfahrensgemäß benutzte Überabtastung mit einem Faktor m ermöglicht eine Vereinfachung des Empfangsfilters (Optimalfilter), indem eine Systemkaskade vorgesehen wird, die einen Interpolator enthält, der zwar mit dem hohen Takt arbeitet, aber keine Multiplizierer enthält, und ein Optimalfilter mit der Filterlänge p, das mit einem um den Faktor m reduzierten Takt arbeitet.

## Patentansprüche

1. Verfahren zur Übertragung von Daten, die als 0/1 oder (-1)/1-Bitstrom vorliegen, über elektrische Verteilnetze, das nachstehende Schritte aufweist,
a) zur Bildung eines Sendesignals:
a1) Bildung einer Folge von Sendesignal-Koeffizienten (p(k)) durch
- Verwendung einer Autokorrelationsfunktion beliebiger Länge, wobei eine Autokorrelationsfunktion mit hohem Haupt- zu Nebenmaximumsverhältnis gewählt ist,
- Entfaltung der Autokorrelationsfunktion zur Gewinnung der Sendesignal-Koeffizienten (p(k)), und
- Polung der Sendesignal-Koeffizienten (p(k)) in Abhängigkeit von der Folge der zu übertragenden Datenbits (0/1; (-1)/1);
a2) Bildung eines an das Frequenzspektrum des Übertragungskanals angepaßten Zwischensignals (pᵢ(k)), das es ermöglicht mit maximaler Sendeenergie zu arbeiten, durch
- Dehnung, wobei eine gedehnte Signalfolge (pₑ(k)) entsteht, und
- Interpolation, wobei das Zwischensignal (pᵢ(k)) entsteht;
a3) Bildung einer Sendesignalfolge (pₘ(k)) durch spezielle ein- oder mehrkanalige Modulation des Zwischensignals (pᵢ(k)) und Umsetzung der Sendesignalfolge (pₘ(k)) in ein Sendesignal entsprechend dem zur Verfügung stehenden Frequenzband, z.B. durch Ansteuerung eines D/A-Wandlers mit Filter und Leistungstufe;
b) zur empfangsseitigen Rückgewinnung der übertragenen Datenbitfolge aus dem Empfangssignal:
b1) ein- oder mehrkanalige Demodulation des Empfangssignals;
b2) Filterung mit einem ein- oder mehrkanaligen Optimalfilter, das so bemessen ist, daß sich am Ausgang die sendeseitig entfaltete Autokorrelationsfunktion ergibt;
b3) Verwendung einer auf das Hauptmaximum des Empfänger-Ausgangssignals angepaßten Schwelle zur Detektion der Bitfolge des übertragenen Datenbitstromes.

2. Verfahren nach Anspruch 1, dadurch gekennzeichnet, daß im Schritt a3) eine mehrkanalige Modulation in solcher Weise durchgeführt wird, daß zueinander orthogonale Signale entstehen.

3. Verfahren nach Anspruch 1 oder 2, dadurch gekennzeichnet, daß im Fall einer mehrkanaligen Modulation durch geeignete Wahl der Modulationsparameter eine Spektralformung durchgeführt wird und damit ohne Filterung eine Anpassung des Sendesignals an die Übertragungsstrecke erreicht wird.

4. Verfahren nach einem der vorstehenden Ansprüche, dadurch gekennzeichnet, daß im Schritt a1) eine Autokorrelationsfunktion verwendet wird, die neben der beliebigen Länge auch eine bestimmte, wählbare Gestaltung der Werte der Nebenmaxima zuläßt, wodurch z.B. auch eine gleichstromfreie Koeffizientenfolge (p(k)) erzeugt werden kann.

5. Verfahren nach einem der vorstehenden Ansprüche, dadurch gekennzeichnet, daß im Fall einer mehrkanaligen Modulation empfangsseitig mit einem Optimalfilter im Multiplexbetrieb gearbeitet wird.

6. Verfahren nach einem der vorstehenden Ansprüche, dadurch gekennzeichnet, daß als Optimalfilter eine Filter-Kaskade verwendet wird, die einen Interpolator und ein Optimalfilter mit reduziertem Takt enthält.

## Claims

1. Method for the transmission of data, which are present as a 0/1 or (-1)/1 bit stream, via electrical distribution networks, which method has the following steps,
a) for the formation of a transmission signal:
a1) Formation of a sequence of transmission signal coefficients (p(k)) by means of
- the use of an autocorrelation function of any desired length, an autocorrelation function having a high primary to secondary maximum ratio being selected,
- the evolution of the autocorrelation function in order to obtain the tranmmission signal coefficients (p(k)), and
- the polarization of the transmission signal coefficients (p(k)) as a function of the sequence of the data bits (0/1; (-1)/1) to be transmitted;
a2) formation of an intermediate signal (pᵢ(k)), which is matched to the frequency spectrum of the transmission channel and permits operation at maximum transmission power, by means of
- expansion, an expanded signal sequence (pₑ(k)) being produced, and
- interpolation, the intermediate signal (pᵢ(k)) being produced;
a3) formation of a transmission signal sequence (pₘ(k)) by means of special single- or multi-channel modulation of the intermediate signal (pᵢ(k)) and conversion of the transmission signal sequence (pₘ(k)) into a transmission signal in accordance with the available frequency band, for example by driving a D/A converter with filter and power stage;
b) for the recovery at the receiving end of the transmitted data bit sequence from the reception signal:
b1) single- or multi-channel demodulation of the reception signal;
b2) filtering with a single- or multi-channel optimum filter which is dimensioned in such a way that the autocorrelation function which is subjected to evolution at the transmitting end is produced at the output;
b3) use of a threshold, which is matched to the primary maximum of the receiver output signal, for detecting the bit sequence of the transmitted data bit stream.

2. Method according to Claim 1, characterized in that a multi-channel modulation is carried out in step a3) in such a way that mutually orthogonal signals are produced.

3. Method according to Claim 1 or 2, characterized in that, in the case of multi-channel modulation, spectral shaping is carried out by means of suitable selection of the modulation parameters and, as a result, matching of the transmission signal to the transmission path is achieved without any filtering.

4. Method according to one of the preceding claims, characterized in that in step al) an autocorrelation function is used which, in addition to any desired length, also permits a specific, selectable configuration of the values of the secondary maxima, as a result of which, for example, a DC-free coefficient sequence (p(k)) can also be generated.

5. Method according to one of the preceding claims, characterized in that, in the case of multi-channel modulation, operation at the receiving end is carried out with an optimum filter in multiplex operation.

6. Method according to one of the preceding claims, characterized in that the optimum filter used is a filter cascade containing an interpolator and an optimum filter having a reduced clock rate.

## Revendications

1. Procédé pour la transmission de données se présentant sous la forme d'un flux de bits 0/1 ou (-1)/1 sur un réseau de distribution d'électricité, comprenant les étapes suivantes:
a) pour la formation d'un signal d'émission:
a1) formation d'une séquence de coefficients de signaux d'émission (p(k)) par
- application d'une fonction de d'autocorrélation de longueur quelconque, une fonction d'autocorrélation avec un rapport maximum principal -maximum secondaire élevé étant retenue,
- développement de la fonction d'autocorrélation pour obtenir les coefficients de signaux d'émission (p(k)) et
- polarisation des coefficients de signaux d'émission (p(k)) en fonction de la séquence de bits de données (0/1; (-1)/1) à transmettre;
a2) formation d'un signal intermédiaire (pᵢ(k)) adapté au spectre de fréquences du canal de transmission qui permette de travailler avec l'énergie d'émission maximale par
- extension, une séquence de signaux (pₑ(k)) étendue étant obtenue et
- interpolation, le signal intermédiaire (pᵢ(k)) étant FORMÉ;
a3) formation d'une séquence de signaux d'émission (pₘ(k)) par modulation spéciale mono- ou multi-canal du signal intermédiaire (pᵢ(k)) et transformation de la séquence de signaux d'émission (pₘ(k)) en un signal d'émission conformément à la bande de fréquence dont on dispose, par exemple par déclenchement d'un convertisseur numérique/analogique doté de filtres et d'un étage de puissance;
b) pour l'obtention, côté réception, de la séquence de bits de données transmises à partir du signal de réception
b1) démodulation mono- ou multi-canal du signal de réception;
b2) filtrage à l'aide d'un filtre optimal mono- ou multi-canal dimensionné de manière à obtenir à la sortie la fonction d'autocorrélation développée côté entrée;
b3) utilisation d'un seuil adapté au maximum principal du signal de sortie du récepteur pour la détection de la séquence de bits du flux de bits de données transmis.

2. Procédé selon la revendication 1, caractérisé par le fait qu'à l'étape a3), on procède à une modulation multi-canal de manière telle que l'on obtienne des signaux mutuellement orthogonaux.

3. Procédé selon la revendication ou la revendication 2, caractérisé par le fait que dans le cas d'une modulation multi-canal, on procède à une mise en forme du spectre par une sélection adaptée des paramètres de modulation et on obtient ainsi, sans filtrage, une adaptation du signal d'émission à la distance de transmission.

4. Procédé selon l'une des revendications précédentes, caractérisé par le fait qu'à l'étape a1), on utilise une fonction d'autocorrélation qui autorise, outre la longueur quelconque, un agencement déterminé, sélectionné des valeurs des maxima secondaires, ce qui permet de produire par exemple également une séquence de coefficients (p(k)) sans courant continu.

5. Procédé selon l'une des revendications précédentes, caractérisé par le fait que, dans le cas d'une modulation multi-canal, on travaille côté réception avec un filtre optimal en mode multiplex.

6. Procédé selon l'une des revendications précédentes, caractérisé par le fait que l'on utilise comme filtre optimal une cascade de filtres qui comprend un interpolateur et un filtre optimal à cadence réduite.
